(19) Europäisches Patentamt
European Patent Office
Office européen des brevets

(11) **EP 2 634 018 B1**

(12) **EUROPÄISCHE PATENTSCHRIFT**

(45) Veröffentlichungstag und Bekanntmachung des Hinweises auf die Patenterteilung:
**26.11.2014 Patentblatt 2014/48**

(51) Int Cl.:
**B60D 1/66** *(2006.01)* **B62D 13/02** *(2006.01)*
**B62D 13/00** *(2006.01)* **B62D 53/08** *(2006.01)*

(21) Anmeldenummer: **12157598.9**

(22) Anmeldetag: **29.02.2012**

(54) **Dolly-Achse**

Dolly axle

Axe de dolly

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**04.09.2013 Patentblatt 2013/36**

(73) Patentinhaber: **Fliegl, Helmut**
**07819 Triptis (DE)**

(72) Erfinder: **Fliegl, Helmut**
**07819 Triptis (DE)**

(74) Vertreter: **Kramer - Barske - Schmidtchen**
**Landsberger Strasse 300**
**80687 München (DE)**

(56) Entgegenhaltungen:
**EP-A1- 1 897 790** **WO-A1-2004/098981**
**GB-A- 2 181 398**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Technisches Gebiet

Die vorliegende Erfindung bezieht sich allgemein auf Dolly-Achsen mit einem drehbaren Zugholm bzw. -deichsel, einer auf der Oberseite des Rahmens angeordneten Sattelkupplungsplatte zum Aufsatteln eines Sattelauflieger-Anhängers und mindestens einem Radsatz. Derartige Dolly-Achsen sind auch allgemein als Dolly-Unterfahrgestelle bekannt.

Hintergrund

Dolly-Achsen bzw. Dolly-Fahrgestelle der eingangs genannten Art werden dazu verwendet, Sattelauflieger-Anhänger mit einem Zugfahrzeug zu koppeln. Des Weiteren dienen derartige Dolly-Achsen dazu, einen Sattelauflieger-Anhänger an einen Anhänger anzukoppeln. Dadurch sind sehr lange Fahrzeuggespanne zusammenstellbar.

Eine derartige Dolly-Achse ist beispielsweise aus der DE 203 05 794 U1 bekannt. Die hierin offenbarte Dolly-Achse soll dazu ausgebildet sein, einen möglichst kleinen Wendekreis eines Lastzugs zu möglichen. Dazu weist die bekannte Dolly-Achse mindestens einen lenkbaren Radsatz und eine Zugdeichsel auf, die um eine vertikale Drehachse drehbeweglich am Rahmen befestigt ist. Die Drehbewegungen der Zugdeichsel werden mit Hilfe von mechanischen Übertragungsmitteln auf Lenkhebel übertragen, die wiederum auf den lenkbaren Radsatz wirken.

Auch die DE 10 2006 044 202 A1 zeigt eine Dolly-Achse mit mindestens einem lenkbaren Radsatz auf. Hier ist die Lage eines Schaltlenkers durch angetriebene Stellmittel veränderbar. Eine sehr ähnliche Dolly-Achse mit lenkbarem Radsatz ist aus der DE 10 2006 044 203 A1 bekannt. In Ergänzung zu der zuvor erläuterten Dolly-Achse ist hier eine drehbar gelagerte Sattelplatte mit integrierten Rotationsanschlägen vorhanden.

Aus der DE 20 2006 015 113 U1 ist eine Dolly-Achse bekannt, bei der die Schwenkachse der Zugdeichsel in Vorwärtsfahrtrichtung vor der lenkbaren Radachse liegt.

Die Dolly-Achse gemäß der DE 20 2007 018 853 U1 weist eine Rückfahrsperre auf, die eine mit der Zugdeichsel verbindbare, federbelastete Rückfahrsperrklaue umfasst, die mit der Zugdeichsel verriegelbar und entriegelbar ist.

Aus der DE 10 2006 044 204 A1 ist eine Dolly-Achse bekannt, bei der die Zugdeichsel über zumindest einen Dämpfer an dem Rahmen abstützbar ist.

Die DE 10 2007 018 445 A1 offenbart ein Fahrzeug mit einer Dolly-Einheit, die einen ersten Rahmen und wenigstens zwei gegenüber dem ersten Rahmen lenkbare Räder aufweist. Weiterhin ist bei dem Fahrzeug mit Dolly-Einheit eine Bremsvorrichtung vorgesehen, die die auf die Räder der Dolly-Einheit wirkende Bremskraft für jede Seite des Fahrzeugs in Abhängigkeit von einer geplanten Fahrtrichtungsänderung separat steuert.

Des Weiteren ist eine Dolly-Achse, bei der wenigstens einige Räder von wenigstens einem Raupenband umschlungen sind, aus der EP 2 181 915 A1 bekannt.

Ein Dolly für einen Sattelzug, bei dem wenigstens eine Achse als Nachlauflenkachse ausgebildet ist, ist in der DE 10 2008 063 660 A1 offenbart.

Weiterhin ist aus der DE 199 42 034 A1 eine Lenkvorrichtung für landwirtschaftliche Anhänger bekannt. Das Anhängegerät ist hinter einem Traktor mittels einer Knickdeichsel oder einer Achsschenkellenkdeichsel gelenkig an einem Zugmaul angehängt.

Aus der EP 2 145 813 A1 ist ein Verfahren und eine Vorrichtung zur Lenkung eines Anhängers bekannt. Der Anhänger umfasst eine starre und wenigstens eine lenkbare Achse. Die lenkbare Achse wird derart gesteuert, dass der Kurvenmittelpunkt des Anhängers auf der Verlängerung der starren Achse liegt.

Die EP 1 897 790 A1 zeigt eine Dolly-Achse, die durch ein lenkbares Radsatzpaar gekennzeichnet ist. Dieses lenkbare Radsatzpaar ist mit einen schwenk- bzw. drehbaren Zugholm zwangsgekoppelt, um entsprechend der Auslenkung des Zugholmes gelenkt zu werden. Nur über diese Zwangskopplung wird überhaupt eine Lenkung der Dolly-Achse in eine bestimmte Richtung geleistet.

Alle vorgenannten Dolly-Achsen weisen einen oder mehrere lenkbare Radsätze auf. Aufgrund der dadurch notwendigen Vielzahl an beweglichen Bauteilen sind derartige Dolly-Achsen aufwändig und teuer.

Zusammenfassung der Erfindung

Gemäß einem Aspekt der vorliegenden Erfindung ist eine Dolly-Achse offenbart, die einen eine Längsrichtung aufweisenden Rahmen und eine am Rahmen angeordnete Sattelkupplungsplatte umfasst. Am Rahmen ist mindestens ein starr angeordneter Radsatz vorhanden. Ein Zugholm ist gegenüber dem Rahmen drehbar befestigt. Mindestens eine ein- bzw. verstellbare Stelleinheit ist dazu ausgebildet, einen vorbestimmten Winkel bzw. berechneten Zugholm-Soll-Winkel, der der Winkel zwischen dem Zugholm und der Längsrichtung der Dolly-Achse ist, einzustellen.

Eine derartige erfindungsgemäße Dolly-Achse kann kostengünstig gefertigt werden und mag im Betrieb weniger störanfällig sein. Der Erfindung liegt der Gedanke zugrunde, anstatt einem oder mehreren lenkbaren Radsätzen nur starre, d.h. nicht lenkbare Radsätze vorzusehen. Um die notwendige Lenkbarkeit der Dolly-Achse zu erzielen, ist erstmals ein drehbarer Zugholm vorhanden, dessen Winkel zur Längsrichtung der Dolly-Achse mit Hilfe einer mechanischen Verstelleinheit einstellbar und an den Fahrweg anpassbar ist. Durch diese "Zwangssteuerung" des Zugholms ist eine einfache "Lenkbarkeit" der Dolly-Achse gegeben.

Beispielsweise kann die Dolly-Achse oder auch ein Zugfahrzeug mit einer Steuereinheit versehen sein, die die einstellbare Stelleinheit derart steuert, dass der Zugholm den Zugholm-Soll-Winkel zwischen dem Zugholm und der Längsrichtung der Dolly-Achse einnimmt. Mit Hilfe der Steuereinheit wird der Zugholm-Soll-Winkel zwischen Zugholm und Dolly-Achsen-Längsrichtung an die jeweiligen Betriebsbedingungen angepasst neu ermittelt und über die mindestens eine Stelleinheit eingestellt.

Eine weitere beispielhafte Ausführungsform einer erfindungsgemäßen Dolly-Achse umfasst eine Prozessoreinheit, die der Steuereinheit ein Stellsignal übermittelt, das dem gewünschten, dem Fahrverlauf angepassten Zugholm-Soll-Winkel zwischen Zugholm und Dolly-Achsen-Längrichtung entspricht.

Ist beispielsweise die hierin offenbarte Dolly-Achse mit einem Zugfahrzeug über eine Zugmaulkupplung drehbar verbunden, so kann es vorteilhaft sein, die Stelleinheit derart anzusteuern, dass sich durch das Einstellen des Zugholm-Soll-Winkels zwischen Zugholm und Längsrichtung der Dolly-Achse ein Ankuppel-Soll-Winkel, der der Winkel zwischen dem Zugholm und der Längsrichtung des Zugfahrzeugs ist, ergibt. Der Ankuppel-Soll-Winkel zwischen dem Zugholm und der Längsrichtung des Zugfahrzeugs kann letztendlich über die Verstellung der Stelleinheit gesteuert werden. Damit kann der Kurvenradius der Dolly-Achse in gewünschter Weise an den von dem Zugfahrzeug zu fahrenden Kurvenradius des Zugfahrzeugs angepasst werden.

Die hierin offenbarte Dolly-Achse kann ferner ein mit dem Zugholm fest verbundenes Drehteil aufweisen, das um eine Drehachse drehbar ist und durch die einstellbare Stelleinheit mechanisch gedreht werden kann, wodurch dann auch der Zugholm verdreht wird. Vorzugsweise ist ein Hebelarm zwischen der Drehachse und dem Anlenkpunkt der Stelleinheit an dem Drehteil oder dem Zugholm gebildet, so dass eine oder mehrere längenveränderbare Verstelleinheiten das Drehteil und damit auch den Zugholm mechanisch drehen.

Vorteilhafterweise können zwei einstellbare Stelleinheiten an der Dolly-Achse vorhanden sein. Dabei kann eine Stelleinheit an einem ersten äußeren Ende des Drehteils befestigt und die andere Stelleinheit an einem dem ersten äußeren Ende gegenüberliegenden zweiten äußeren Ende des Drehteils befestigt sein. Die verstellbaren Stelleinheiten können beispielsweise pneumatische oder hydraulische Aktuatoren sein. Vorzugsweise befinden sich die entsprechenden Pneumatik- oder Hydraulikversorgungssysteme an der Dolly-Achse. Damit ist lediglich eine Stromversorgung vom Zugfahrzeug zu der Dolly-Achse notwendig.

Ein weiterer Aspekt der vorliegenden Erfindung betrifft ein Verfahren zur Steuerung einer Dolly-Achse mit Rahmen. Die Dolly-Achse umfasst weiterhin einen am Rahmen drehbar befestigten Zugholm und mindestens einen nicht lenkbaren, also starren Radsatz. Bei dem erfindungsgemäßen Verfahren wird ein einzustellender Winkel, der Zugholm-Soll-Winkel, zwischen einer Längsrichtung der Dolly-Achse und des Zugholms in Abhängigkeit von dem Ankuppel-Soll-Winkel zwischen Zugholm und Längsachse des Zugfahrzeugs ermittelt. Es erfolgt dann ein mechanisches Einstellen des Zugholm-Ist-Winkels zwischen Zugholm und Längsrichtung der Dolly-Achse, so dass dieser dem Zugholm-Soll-Winkel entspricht.

Ferner kann bei der Bestimmung des Zugholm-Soll-Winkels zwischen dem Zugholm und der Längsrichtung der Dolly-Achse der Ankuppel-Soll-Winkel zwischen dem Zugholm und der Längsachse des Zugfahrzeugs verwendet werden. Mit Hilfe der Verstelleinheit wird der Zugholm-Ist-Winkel zwischen dem Zugholm und der Längsrichtung der Dolly-Achse derart eingestellt, dass er dem Zugholm-Soll-Winkel entspricht. Der Ankuppel-Soll-Winkel zwischen dem Zugholm und der Längsachse des Zugfahrzeugs kann in Abhängigkeit von dem aktuellen Kurvenradius des Zugfahrzeugs festgelegt werden. Der aktuelle Kurvenradius des Zugfahrzeugs kann beispielsweise aus der aktuellen Winkelgeschwindigkeit des Zugfahrzeugs und der aktuellen Bahngeschwindigkeit der Dolly-Achse bestimmt werden.

Weiterhin kann beispielsweise ein dem Zugholm-Soll-Winkel zwischen der Längsrichtung der Dolly-Achse und dem Zugholm entsprechendes Stellsignal für die einstellbare Stelleinheit ermittelt werden. Das Stellsignal gibt an, um wie viel die einstellbare Stelleinheit verfahren muss, damit der Zugholm mit der Längsrichtung der Dolly-Achse den einzustellenden Winkel einschließt.

Gemäß einem weiteren Aspekt der vorliegenden Erfindung weist ein Zuggespann ein Zugfahrzeug und eine hierin offenbarte Dolly-Achse auf, die mit dem Zugfahrzeug über eine Zugmaulkupplung drehbar verbunden ist. Das Zuggespann kann ferner einen Drehratensensor umfassen, der eine aktuelle Winkelgeschwindigkeit des Zugfahrzeugs ermittelt. Weiterhin kann ein Geschwindigkeitssensor vorhanden sein, der die aktuelle Bahngeschwindigkeit des Zugfahrzeugs bestimmt. Eine Prozessoreinheit bestimmt vorzugsweise in Abhängigkeit von der Winkelgeschwindigkeit und der Bahngeschwindigkeit des Zugfahrzeugs den aktuellen Kurvenradius des Zugfahrzeugs. Aus dem ermittelten Kurvenradius des Zugfahrzeugs kann in der Prozessoreinheit der Winkel zwischen der Längsachse des Zugfahrzeugs und des Zugholms ermittelt werden. In Abhängigkeit von dem gewünschten Winkel zwischen dem Zugholm und der Zugfahrzeugs-Längsrichtung kann daraufhin der Winkel zwischen dem Zugholm und der Längsrichtung der Dolly-Achse ermitteln werden. Der Kurvenradius kann jedoch auch beispielsweise über den Lenkeinschlag des Zugfahrzeugs bestimmt werden. Vorzugsweise werden bei diesen Winkelbestimmungen auch die tatsächlichen Geometrieverhältnisse und Abmessungen der Dolly-Achse berücksichtigt.

Die vorliegende Erfindung schafft u.a. eine aus einem Zugfahrzeug, einer erfindungsgemäßen Dolly-Achse und einem Sattelauflieger-Anhänger bestehende Fahrzeugkombination, mit der es möglich ist, spezielle Kurvenlaufeigenschaften zu erzielen. Insbesondere ist es erfindungsgemäß möglich, einen sogenannten BOKraftkreis gemäß § 32d StVZO (Straßenverkehrszulassungsordnung der Bundesrepublik Deutschland) einzuhalten. Alle Erläuterungen und Angaben betreffend ein erfindungsgemäßes Zuggespann treffen selbstverständlich auch auf eine erfindungsgemäße Dolly-Achse an sich zu. Des Weiteren sind auch unter den Begriff "Zuggespanne" zu subsumieren.

Kurze Beschreibung der Zeichnungen

Fig. 1 zeigt eine Seitenansicht eines Zuggespanns, das ein Zugfahrzeug und eine erfindungsgemäße Dolly-Achse aufweist;
Fig. 2 zeigt eine Draufsicht einer erfindungsgemäßen Dolly-Achse;
Fig. 3 zeigt beispielhaft die Trigonometrie eines Zuggespanns der Fig. 1 während einer Kurvenfahrt; und
Fig. 4 zeigt ein beispielhaftes Ablaufdiagramm eines erfindungsgemäßen Verfahrens zur Steuerung einer Dolly-Achse.

Detaillierte Beschreibung

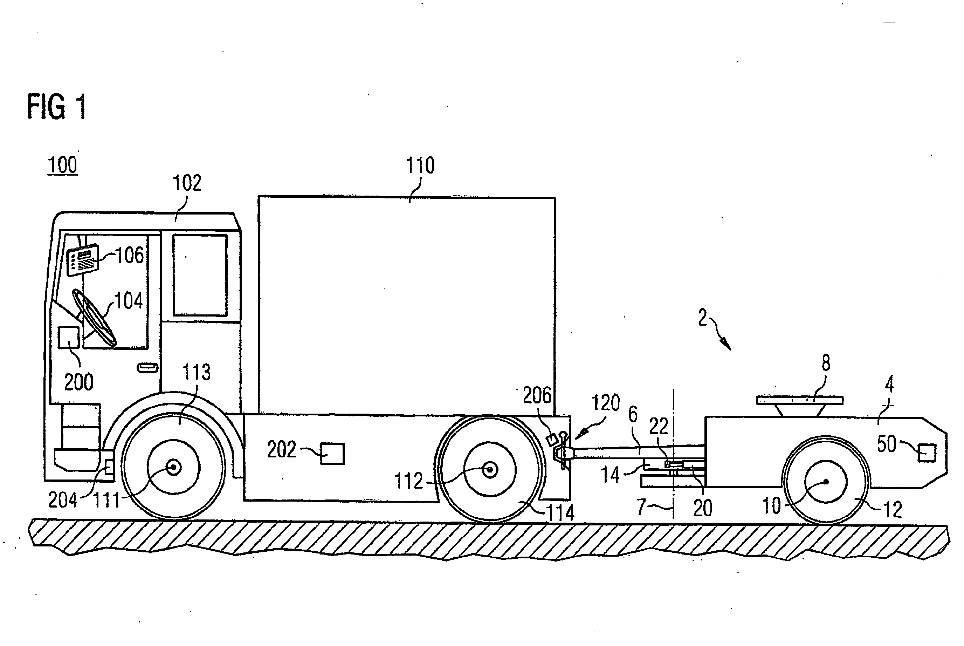

Eine beispielhafte Ausführungsform der vorliegenden Erfindung ist aus der Fig. 1 ersichtlich. Das darin gezeigte Zuggespann 100 umfasst ein Zugfahrzeug 102 und eine erfindungsgemäße Dolly-Achse 2.

An dem Zugfahrzeug 102 ist die Dolly-Achse 2 angehängt. Das Zugfahrzeug 102 weist eine Vorderachse 111 mit einem lenkbaren Radsatz 113 und mindestens eine Hinterachse 112 mit mindestens einem nicht lenkbaren Radsatz 114 auf. Weiterhin kann das Zugfahrzeug 102 einen Laderaum 110, zum Beispiel einen Container, aufweisen.

Das Zugfahrzeug 102 kann ferner mit einem Sattelauflieger-Anhänger über eine bekannte Sattelkupplung verbunden sein. An diesem Sattelauflieger-Anhänger kann dann ein weiterer Sattelauflieger-Anhänger mit Hilfe der erfindungsgemäßen Dolly-Achse 2 angekoppelt werden.

Das Zugfahrzeug 102 umfasst ferner ein Lenkrad 104 und eine Bedien- und/oder Anzeigeeinheit 106. Ein Bediener des Zugfahrzeugs 102 kann über das Lenkrad 104 das Zugfahrzeug 102 und somit auch das Zuggespann 100 steuern und lenken. Der Bediener kann über die Bedien- und/oder Anzeigeeinheit 106 Parameter eingeben, die beispielsweise die geometrischen Abmessungen des Zuggespanns umfassen können. Zu den Parametern kann aber beispielsweise auch die Anzahl der Achsen des Zugfahrzeugs 2 zählen. Die Bedien- und/oder Anzeigeeinheit 106 kann beispielsweise ein Touchpanel sein, in das der Bediener per Hand die Parameter eingeben kann. An dem Lenkrad 104 kann weiterhin ein Sensor befestigt sein, der die Drehbewegungen des Lenkrads 104, beispielsweise den Drehwinkel, misst.

Die Dolly-Achse 2 kann über einen Zugholm 6 und über eine Kupplungseinheit mit dem Zugfahrzeug 102 drehbar verbunden sein. Wie in der Fig. 1 angedeutet, kann die Kupplungseinheit beispielsweise durch eine bekannte Zugmaulkupplung 120 oder durch eine Kugelkopfkupplung ausgeführt sein. Es sei angemerkt, dass die Zugmaulkupplung 120 eine lösbare Verbindung darstellt, so dass die Dolly-Achse 2 von dem Zugfahrzeug 102 abgekoppelt werden kann.

Die Dolly-Achse 2 kann einen Rahmen 4, eine Sattelkupplungsplatte 8 und eine Radachse 10 mit mindestens einem Radsatz 12 aufweisen. In einer Ausführungsform kann die Dolly-Achse 2 auch zwei oder mehr als zwei nicht lenkbare Radachsen aufweisen.

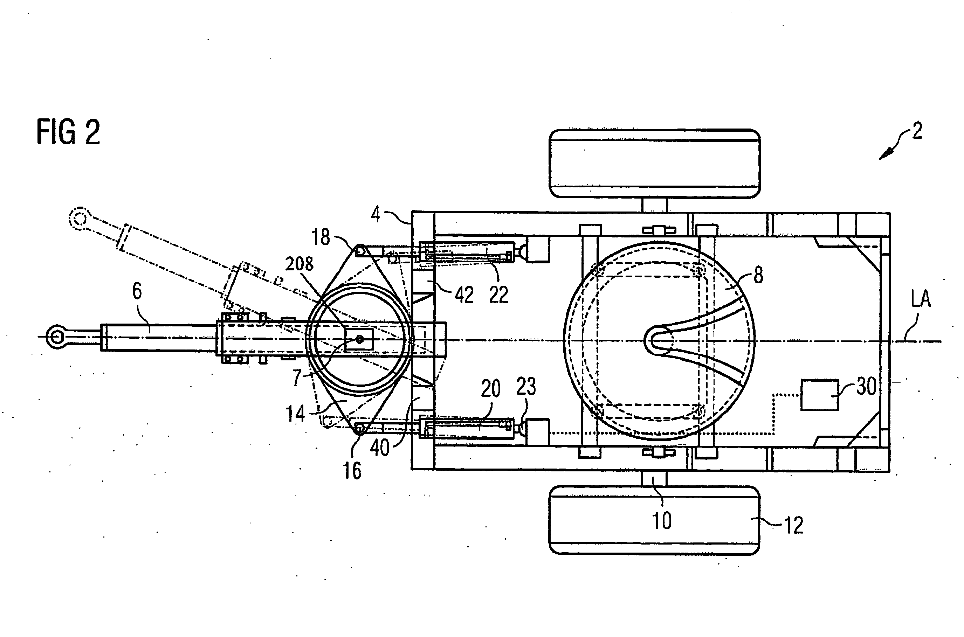

Der Radsatz 12 kann über eine Einzelradaufhängung verfügen oder, wie in der Ausführungsform gemäß der Fig. 2 gezeigt, über die starre Radachse 10 mit dem Rahmen 4 verbunden sein.

Die Sattelkupplungsplatte 8, die beispielsweise durch eine im Stand der Technik bekannte Sattelkupplungsplatte dargestellt ist, kann einen Sattelauflieger-Anhänger (nicht dargestellt), der mit einem der Sattelkupplungsplatte 8 entsprechenden Gegenstück, beispielsweise einem Königszapfen, versehen sein kann, schwenkbar mit der Dolly-Achse 2 verbinden.

Die Dolly-Achse 2 kann weiterhin ein Drehteil 14 aufweisen, das mit dem Zugholm 6 verbunden ist und sich um eine Drehachse 7 drehen kann. Durch die Drehung des Drehteils 14 um die Drehachse 7 wird auch der Zugholm 6 gedreht. Das Drehteil weist ein erstes äußeres Ende 16 und ein zweites äußeres Ende 18 auf. Die Dolly-Achse 2 weist weiterhin eine einstellbare Stelleinheit 20 auf, die ein erstes Ende 21 und ein zweites Ende 23 (siehe Fig. 2) umfasst. Das erste Ende 21 der Stelleinheit 20 ist an dem Drehteil 14 befestigt, wobei das zweite Ende 23 an dem Rahmen 4 der Dolly-Achse befestigt ist. Die einstellbare Stelleinheit 20 dreht das Drehteil 14 und somit auch den Zugholm 6 um die Drehachse 7.

Die Dolly-Achse 2 weist ferner ein elektronisches Bremssystem (EBS) 50 auf, das bei einem Bremsvorgang des Zugfahrzeugs 102 die Dolly-Achse 2 abbremst, um somit das Abbremsen des gesamten Zuggespanns 100 zu unterstützen. Weiterhin kann das EBS 50 die aktuelle Geschwindigkeit der Dolly-Achse 2 ermitteln.

In der Fig. 2, die eine Draufsicht der Dolly-Achse 2 aus der Fig. 1 zeigt, ist zu erkennen, dass die Dolly-Achse 2 zwei einstellbare Stelleinheiten 20, 22 umfasst. Dabei ist eine Stelleinheit 20, wie bereits erwähnt, an dem ersten äußeren Ende 16 des Drehteils 14 befestigt und die andere Stelleinheit 22 an einem dem ersten äußeren Ende 16 gegenüberliegenden zweiten äußeren Ende 18 des Drehteils 14 befestigt. Beide Stelleinheiten 20, 22 sind dazu ausgebildet, das Drehteil 14 um die die Drehachse 7 zu drehen.

Das erste und zweite äußere Ende 16, 18 des Drehteils 14sind von der Drehachse 7 radial beabstandet, so dass sich zwischen dem ersten äußeren Ende 16 und der Drehachse 7, aber auch zwischen dem zweiten äußeren Ende 18 und der Drehachse 7, ein Hebelarm ausbildet. Die Stelleinheiten 20, 22 sind dazu ausgebildet, an den Angriffspunkten der Stelleinheiten 20, 22 an dem Drehteil 14 eine Druck- und/oder Zugkraft derart aufzubringen, dass sich das Drehteil 14 und somit auch der Zugholm 6 dreht.

In einer Ausführungsform kann die Dolly-Achse 2 auch nur eine oder mehr als zwei einstellbare Verstelleinheiten 20, 22 aufweisen, die das Drehteil 14 drehen können. Dabei kann die eine Stelleinheit 20 Druck- und/oder Zugkräfte auf das Drehteil 14 aufbringen, damit dieses in beide Richtungen, zum Beispiel im Uhrzeigersinn und gegen den Uhrzeigersinn, gedreht werden kann.

Die Stelleinheiten 20, 22 sind an dem der Anbindung zum Drehteil 14 gegenüberliegenden Seite mit dem Rahmen 4 verbunden, wobei eine gewisse Beweglichkeit gegenüber dem Rahmen ermöglicht ist, da sich aufgrund der Drehbewegungen des Drehteils 14 auch Bewegungen der einstellbaren Stelleinheiten 20, 22 relativ zum Rahmen 4 ergeben können.

Die einstellbaren Stelleinheiten 20, 22 sind, wie in der Fig. 2 gezeigt, hydraulische Hubzylinder, die einen Zylinder und einen in dem Zylinder hin und her beweglichen Kolben aufweisen. Dabei sei angemerkt, dass die hydraulischen Hubzylinder Teil eines hydraulischen Systems (nicht dargestellt) sein können, welches zum Beispiel eine Hydraulikpumpe, beispielsweise eine Zahnradpumpe, Hydraulikleitungen und einen Hydrauliktank umfassen kann. Das hydraulische System kann weiterhin einen Energiespeicher umfassen, der beispielsweise die von der Zahnradpumpe bereitgestellte Energie zu einem Zeitpunkt speichern kann, bei dem die Steuerung des Zugholms 6 nicht aktiv ist.

Das Aufbringen der Druck- und/oder Zugkräfte auf das Drehteil 14 erfolgt über lineare Ausfahrbewegungen der Kolben. Das Drehteil 14 kann demnach durch die linearen Ausfahrbewegungen der Kolben der einstellbaren Stelleinheiten 20, 22 um die Drehachse 7 gedreht werden, so dass sich auch der Zugholm 6 dreht. Beispielsweise kann die Stelleinheit 20 bei einer Linkskurve des Zuggespanns 100 eine Druckkraft auf das Drehteil 14 aufbringen. Bei einer Rechtskurve kann beispielsweise die Stelleinheit 22 eine Druckkraft auf das Drehteil14 aufbringen.

In einer weiteren Ausführungsformen können die einstellbaren Verstelleinheiten 20, 22 pneumatisch oder elektrisch betätigbar sein. Außerdem kann der Zugholm 6 beispielsweise auch über ein Winkelgetriebe, über ein Schneckengetriebe oder Reibradgetriebe gedreht werden.

Die beiden einstellbaren Stelleinheiten 20, 22 werden von einer Steuereinheit 30, die sich an der Dolly-Achse 2 befindet, betätigt. Die Steuereinheit 30 sendet ein Stellsignal an die Verstelleinheiten 20, 22, damit diese dem Signal entsprechende Ein- oder Ausfahrbewegungen der Kolben ausführen und dabei das Drehteil 14 und somit auch den Zugholm 6 drehen. Das Stellsignal kann beispielsweise ein Signal an die Zahnradpumpe (nicht dargestellt) darstellen, die daraufhin einen bestimmten Betrag an Hydraulikflüssigkeit in den Hydraulikzylinder pumpt, damit sich das Drehteil 14 wie gewünscht dreht.

Die Steuereinheit 30 kann die einstellbaren Stelleinheiten 20, 22 derart steuern, dass das Drehteil 14 den Zugholm 6 so dreht, dass sich ein einzustellender Winkel zwischen einer Längsrichtung LA der Dolly-Achse 2 und dem Zugholm 6 ergibt. Die Steuereinheit 30 kann ein dem einzustellenden Winkel entsprechendes Signal zwischen einer Längsrichtung LA der Dolly-Achse 2 und dem Zugholm 6 in das Stellsignal für die Stelleinheiten 20, 22 umrechnen. Das Senden der Signale und Empfangen der Parameter kann beispielsweise über ein CAN-Bus System (nicht dargestellt), aber auch kabellos, zum Beispiel über WLAN oder Bluetooth, erfolgen.

Beispielsweise ist die Steuerung des Zugholms 6 nur aktiv, wenn sich die Dolly-Achse mit einer Mindestgeschwindigkeit und auch nicht schneller als eine Maximalgeschwindigkeit vorwärts bewegt. Damit würde zum Beispiel bei einer Rückwärtsfahrt die Verstellung des Zugholms 6 der Dolly-Achse nicht aktiv sein. Alternativ ist es aber auch möglich, während einer Rückwärtsfahrt eine aktive Verstellung des Zugholms der Dolly-Achse vorzusehen. In diesem Fall ist beispielsweise die Verstellung des Zugholmes eine andere als während einer Vorwärtsfahrt.

Die Minimalgeschwindigkeit beträgt beispielsweise 2-4 km/h und die Maximalgeschwindigkeit kann beispielsweise 40-50 km/h betragen. Insbesondere kann dieses Geschwindigkeitsintervall mit der Untergrenze von 2 km/h, vorzugsweise 4 km/h, und mit der Obergrenze von 45 km/h, vorzugsweise 40 km/h, angegeben werden. Befindet sich die Geschwindigkeit der Dolly-Achse 2, die beispielsweise über das EBS 50 bestimmt werden kann, innerhalb des beschriebenen Geschwindigkeitsintervalls, so ist die Steuerung des Zugholms 6aktiv.

Befindet sich jedoch die Geschwindigkeit der Dolly-Achse 2 außerhalb des beschriebenen Geschwindigkeitsintervalls, so ist die Steuerung des Zugholms 6 nicht aktiv. In diesem Fall kann die Steuereinheit 30 dazu ausgebildet sein, den Stelleinheiten 20, 22 ein entsprechendes Signal zu senden. Dieses Signal veranlasst die Stelleinheiten 20, 22 dazu, den Zugholm 6 in eine Ruhelage, in der der Zugholm 6 mit der Längsrichtung LA der Dolly-Achse 2 einen Winkel von beispielsweise ca. 180° (z. B. 175° - 185°) einschließt, zu drehen und in dieser zu fixieren. Erst wenn sich die Geschwindigkeit der Dolly-Achse 2 wieder in dem oben erwähnten Geschwindigkeitsbereich befindet, wird die Verstellung des Zugholms 6 wieder aktiviert.

Im Falle einer auftretenden Störung der Steuerung des Zugholms 6 kann die Dolly-Achse weiterhin einen Verriegelungsmechanismus (nicht dargestellt) aufweisen. Der Verriegelungsmechanismus sperrt eine Drehung des Zugholms 6 und verriegelt diesen in seiner Ruhelage. Beispielsweise kann der Verriegelungsmechanismus in Form eines federbelasteten Pneumatikzylinders ausgestaltet sein, der in druckloser Stellung den Zugholm 6 verriegelt. Sobald das Verstellsystem mit den Stelleinheiten 20, 22 aktiv ist, d.h. die Fahrgeschwindigkeit liegt innerhalb des genannten Geschwindigkeitsintervalls, wird der Pneumatikzylinder mit Druck beaufschlagt und entriegelt den Zugholm 6, wodurch das Verdrehen des Zugholms 6 wieder ermöglicht ist.

Die Dolly-Achse 2 kann über den Zugholm 6 und die Zugmaulkupplung 120 mit dem Zugfahrzeug 102 verbunden werden. Die Form des Zugholms 6 ist nicht auf die im Ausführungsbeispiel gezeigte Form beschränkt, sondern kann auch andere Deichsel sein, wie beispielsweise eine Schwanenhals-Deichsel oder Dreiecksdeichsel.

Die Dolly-Achse 2 weist ferner mindestens einen Stopper 40 auf, der die Drehbewegungen des Zugholms 6 um die Drehachse 7 begrenzt. Der Stopper 40 kann einstellbar sein, um unterschiedlich große Drehbewegungen des Zugholms 6 zu ermöglichen. Wie in der Fig. 2 gezeigt, können zwei Stopper 40, 42 vorhanden sein, damit die Drehungen in beiden Drehrichtungen, zum Beispiel im Uhrzeigersinn und gegen den Uhrzeigersinn, begrenzt werden können.

In einer Ausführungsform können die Stopper 40 und 42 derart ausgebildet sein, dass der Zugholm 6 aus seiner Ruhelage um maximal ca. 20° in beide Richtungen gedreht werden kann.

Unter nochmaliger Bezugnahme auf die Fig. 1 ist ersichtlich, dass das Zuggespann 100 weiterhin eine Prozessoreinheit 200 umfasst, die Parameter empfangen kann, aus denen der aktuelle Kurvenradius des Zugfahrzeugs 102 berechnet werden kann. Die Prozessoreinheit 200 kann beispielsweise auch an der Dolly-Achse 2 angeordnet sein. Zu diesen Parametern zählen zum Beispiel die aktuelle Winkelgeschwindigkeit $\omega$ des Zugfahrzeugs 102, die aktuelle Bahngeschwindigkeit v des Zugfahrzeugs 102 und/oder der Lenkeinschlag des Zugfahrzeugs 102. Es sei angemerkt, dass auch andere Parameter, mit denen der Kurvenradius des Zugfahrzeugs 102 berechnet werden kann, von der Prozessoreinheit 200 empfangen werden können. Darunter können beispielsweise auch die vom Bediener in die Bedien- und/oder Anzeigeeinheit 106 eingegeben Parameter fallen.

Die Winkelgeschwindigkeit $\omega$ des Zugfahrzeugs 102 kann beispielsweise mit einem Gyroskop oder einem Drehratensensor 202 ermittelt werden. In einer Ausführungsform kann die aktuelle Bahngeschwindigkeit v des Zugfahrzeugs und/oder die Bahngeschwindigkeit der Dolly-Achse 2 auch über GPS-Daten ermittelt werden. Die Bahngeschwindigkeit v des Zugfahrzeugs 102 kann beispielsweise über einen Geschwindigkeitssensor 204 an den Rädern des Zugfahrzeugs 102 ermittelt werden, kann aber auch beispielsweise über eine Messung der Geschwindigkeit über dem Boden, zum Beispiel durch Radarmessung, ermittelt werden. Der Lenkeinschlag des Zugfahrzeugs 102 kann beispielsweise über am Lenkrad 104 applizierten Winkelsensoren bestimmt werden. Weiterhin könnte ein aktueller Winkel zwischen einer Längsrichtung ZA des Zugfahrzeugs 102 und des Zugholms 6 der Dolly-Achse 2 auch mit Hilfe eines Winkelsensors 206, der an der Zugmaulkupplung 120 appliziert ist, direkt ermittelt werden.

Die Dolly-Achse 2 weist weiterhin einen sich an der Drehachse 7 befindenden Winkelsensor 208, beispielsweise einen Winkeldrehkranz, auf, der den aktuellen Winkel zwischen dem Zugholm 6 und der Längsrichtung LA der Dolly-Achse 2 ermitteln und an die Steuereinheit 30 senden kann.

Die Prozessoreinheit 200 kann den aktuellen Kurvenradius des Zugfahrzeugs 2 mit Hilfe der empfangenen Parameter ermitteln, um daraufhin den einzustellenden Winkel zwischen dem Zugholm 6 und der Längsachse LA der Dolly-Achse 2 zu berechnen. Anschließend wird ein dem einzustellenden Winkel entsprechendes Signal an die Steuereinheit 30 gesendet, die aus diesem Signal das bereits erwähnte Stellsignal berechnet und an die Stelleinheiten 20, 22 sendet, damit sich der gewünschte Winkel zwischen dem Zugholm 6 und der Längsrichtung ZA des Zugfahrzeugs einstellt.

Es sei angemerkt, dass der einzustellende Winkel zwischen der Längsrichtung LA der Dolly-Achse 2 trigonometrisch über den gewünschten Winkel zwischen der Längsrichtung ZA des Zugfahrzeugs 102 ermittelt werden kann. Dementsprechend können die einstellbaren Stelleinheiten 20, 22 über ein direktes Einstellen des einzustellenden Winkels zwischen der Längsrichtung LA der Dolly-Achse 2 und des Zugholms 6 den gewünschten Winkel zwischen der Längsrichtung ZA des Zugfahrzeugs 102 und des Zugholms 6 steuern.

Gewerbliche Anwendbarkeit

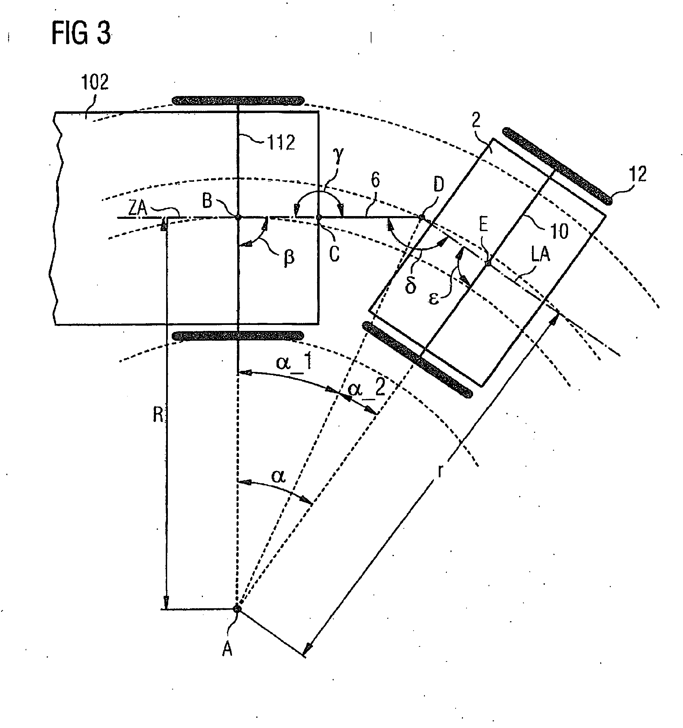

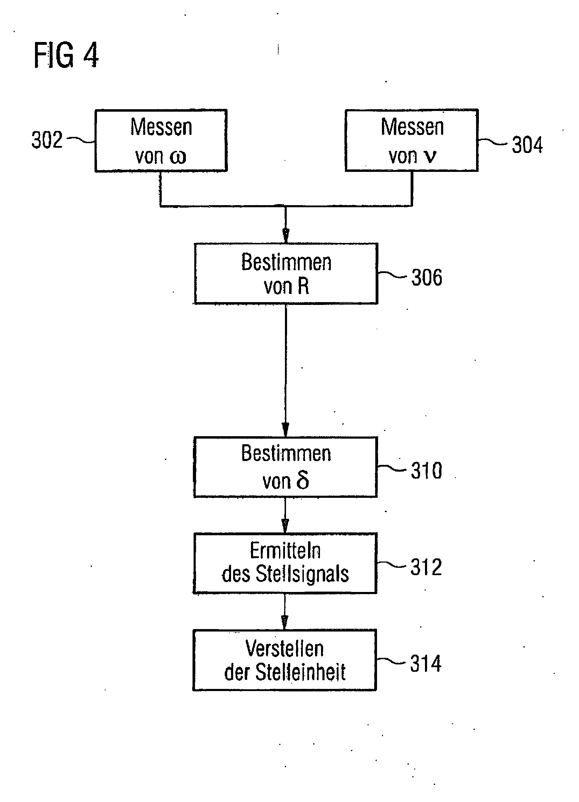

Im Folgenden wird mit Bezug auf die Fig. 3 und 4 der Betrieb der Dolly-Achse 2 gemäß der Erfindung beschrieben.

Die Steuerung der Dolly-Achse 2 wird anhand einer Ausführungsform beschrieben, bei der die erfindungsgemäße Dolly-Achse 2 einen gelenkig mit dem Rahmen 4 verbundenen Zugholm 6 und mindestens einen starr an dem Rahmen 4 angeordneten Radsatz 12 aufweist.

Die Fig. 3 zeigt schematisch die Trigonometrie eines Zuggespanns 100 bei einer Kurvenfahrt, das eine an einem Zugfahrzeug 102 angekoppelte erfindungsgemäße Dolly-Achse 2 umfasst. Die Fig. 3 zeigt die Hinterachse 112 des Zugfahrzeugs 102 und die Radachse 10 der Dolly-Achse 2. Die verwendeten Buchstaben haben dabei folgende Bedeutung:

A:     Mittelpunkt der Kreisbahn des Zugfahrzeugs 102 und der Dolly-Achse 2,
B:     Mittelpunkt der starren Hinterachse des Zugfahrzeugs 102,
C:     Kupplungseinheit 120, an dem die Dolly-Achse 2 mit dem Zugfahrzeug 102 gekoppelt ist,
D:     Drehachse 7 des Zugholms 6 der Dolly-Achse 2,
E:     Mittelpunkt der Radachse 10 der Dolly-Achse 2,
$\alpha$:     Winkel zwischen der Verlängerung der Hinterachse 112 des Zugfahrzeugs 102 und der Verlängerung der Radachse 10 der Dolly-Achse 2,
$\beta$:     Winkel zwischen der starren Hinterachse 112 des Zugfahrzeugs 102 und der Längrichtung ZA des Zugfahrzeugs 102,
$\gamma$:     (gewünschter) Winkel zwischen dem Zugholm 6 der Dolly-Achse 2 und der Längsrichtung ZA des Zugfahrzeugs 102,
$\delta$:     (einzustellender) Winkel zwischen dem Zugholm 6 der Dolly-Achse 2 und der Längsrichtung LA der Dolly-Achse 2,
$\varepsilon$:     Winkel zwischen der Radachse 10 der Dolly-Achse 2 und der Längsrichtung LA der Dolly-Achse 2,
R:     (aktueller) Kurvenradius des Zugfahrzeugs 102, und
r:     (aktueller) Kurvenradius der Dolly-Achse 2.
$\omega$:     (aktuelle) Winkelgeschwindigkeit des Zugfahrzeugs 102
v:     (aktuelle) Bahngeschwindigkeit des Zugfahrzeugs 102

Der Abstand AB entspricht dem Kurvenradius R des Zugfahrzeugs 102. Der Abstand BC entspricht dem konstanten Abstand zwischen der starren Hinterachse des Zugfahrzeugs 102 und der Kupplungseinheit 120. Der Abstand CD entspricht der Länge des Zugholms 6. Der Abstand DE entspricht dem konstanten Abstand zwischen der Drehachse 7 des Zugholms 6 und der Radachse 12 der Dolly-Achse 2. Der Abstand DA entspricht dem Kurvenradius r der Dolly-Achse 2.

Eine Vorbedingung für eine Kurvenfahrt eines Zugfahrzeugs 102 mit angekoppelter Dolly-Achse 2 kann sein, dass sich die Verlängerungen der Hinterachse 112 des Zugfahrzeugs und der Radachse 10 der Dolly-Achse 2 im Kurvenmittelpunkt A schneiden. Mit dieser Vorbedingung kann eine Kurvenfahrt des Zuggespanns 100 mit günstigen Seitenabriebswerten realisiert werden.

Der Winkel $\beta$ kann aufgrund der Bauweise der Hinterachse 112 relativ zu der Längsrichtung des Zugfahrzeugs 102 konstant sein, beispielsweise 90°. Der Winkel $\varepsilon$ kann ebenfalls aufgrund der Bauweise der Radachse 10 relativ zu der Längsrichtung der Dolly-Achse 2 konstant sein, beispielsweise 90°.

Der gewünschte Winkel $\gamma$ kann innerhalb eines vorbestimmten Winkelbereichs, beispielsweise 160° bis 200° gehalten werden. Die Steuerung 30 kann aber auch dazu ausgebildet sein, diesen Winkel $\gamma$ konstant bei 180° zu halten. Es sei jedoch angemerkt, dass der gewünschte Winkel $\gamma$ auch beispielsweise in Abhängigkeit des aktuellen Kurvenradius R bestimmt und angepasst werden kann. Der gewünschte Winkel $\gamma$ kann auch beispielsweise durch den Bediener vorgegeben werden, der eine entsprechende Eingabe in die Bedien- und/oder Anzeigeeinheit 106 tätigt.

Die Prozessoreinheit 200 kann dazu ausgebildet sein, den gewünschten Winkel $\gamma$ zu ermitteln. Aus dem gewünschten Winkel $\gamma$ und auch dem ermittelten Kurvenradius R des Zugfahrzeugs 102 kann der Winkel $\alpha$ berechnet werden. Der Winkel $\alpha$ kann beispielsweise auch von den geometrischen Abmessungen des Zuggespanns 100, wie beispielsweise den Längen BC, CD und DE, abhängen.

Wie bereits erwähnt kann während einer Kurvenfahrt die aktuelle Winkelgeschwindigkeit $\omega$ und die aktuelle Bahngeschwindigkeit v des Zugfahrzeugs ermittelt und der Prozessoreinheit 200 bereitgestellt werden. Die Prozessoreinheit 200 kann daraufhin den aktuellen Kurvenradius R des Zugfahrzeugs 102 bestimmen. Beispielsweise kann der Kurvenradius R des Zugfahrzeugs folgendermaßen berechnet werden:

$$R = \frac{v}{\omega}$$

Die aktuelle Bahngeschwindigkeit v des Zugfahrzeugs ist unter Umständen auch durch die Bahngeschwindigkeit der Dolly-Achse zu ersetzen. Die Fahrgeschwindigkeit der Dolly-Achse liefert z.B. das in der Dolly-Achse fakultativ vorhandene EBS 50. Diese Art der Berechnung des Radius R mit der Fahrgeschwindigkeit der Dolly-Achse ist in der Praxis möglich, da der Unterschied der Bahngeschwindigkeit v des Zugfahrzeugs 102 und der Bahngeschwindigkeit der Dolly-Achse 2 vernachlässigbar klein ist.

In einer alternativen Ausführungsform ist zusätzlich zu dem Drehwinkelsensor am Zugfahrzeug ein Drehwinkelsensor an der Dolly-Achse angebracht. Somit ist es möglich, aus der Winkelgeschwindigkeit und der Bahngeschwindigkeit der Dolly-Achse den aktuellen Kurvenradius r der Dolly-Achse zu berechnen. In dieser Ausführungsform kann der Prozessoreinheit der aktuelle Kurvenradius r der Dolly-Achse und der aktuelle Kurvenradius R des Zugfahrzeugs bereitgestellt werden. Die Prozessoreinheit kann daraufhin den Zugholm-Soll-Winkel in Abhängigkeit eines vorgegebenen Verhältnisses der beiden Kurvenradien berechnen und der Steuereinheit ein entsprechendes Signal bereitstellen.

Es sei angemerkt, dass der Kurvenradius R des Zugfahrzeugs 102 beispielsweise auch aus dem Lenkeinschlag des Lenkrads 104 oder aus den Parametern, die vom Bediener des Zugfahrzeugs 102 in die Bedien- und/oder Anzeigeeinheit 106 eingegeben werden können, wie zum Beispiel die geometrischen Abmessungen des Zuggespanns 100, ermittelt werden kann.

Die Prozessoreinheit 200 kann ferner dazu ausgebildet sein, den Winkel $\alpha$ in Abhängigkeit von dem aktuellen Kurvenradius R des Zugfahrzeugs 102 mit Hilfe folgender beispielhaften Formel zu bestimmen:

$$\alpha = \tan^{-1}\left(\frac{BC+CD}{R}\right) + \sin^{-1}\left(\frac{DE}{\sqrt{R^2+(BC+CD)^2}}\right)$$

In solch einer Ausführungsform wird beispielsweise der gewünschte Winkel $\gamma$ durch anpassen des einzustellenden Winkels $\delta$ konstant bei 180° gehalten.

Die Prozessoreinheit 200 kann beispielsweise aufgrund der oben dargestellten Formel ein Diagramm bereitstellen, in dem der Winkel $\alpha$ in Abhängigkeit des Kurvenradius R aufgetragen ist. Aus diesem Diagramm kann die Prozessoreinheit 200 den dem aktuellen Kurvenradius R entsprechenden Winkel $\alpha$ erhalten. Der Winkel $\alpha$ kann beispielsweise indirekt proportional zu dem Kurvenradius R des Zugfahrzeugs 102 sein, d.h. je größer der Kurvenradius R des Zugfahrzeugs 102 ist, desto kleiner ist der Winkel $\alpha$. Dementsprechend kann ein solches Diagramm eine hyperbelartige Kurve darstellen.

Wie in der Fig. 3 gezeigt, kann der Winkel $\alpha$ eine Summe der Winkel $\alpha\_1$ und $\alpha\_2$ sein. Der Winkel $\alpha\_1$ kann denjenigen Winkel beschreiben, der durch die Verlängerung der Hinterachse 112 des Zugfahrzeugs 102 und der Verbindung zwischen dem Drehpunkt D und dem Kurvenmittelpunkt A eingeschlossen wird. Der Winkel $\alpha\_2$ kann durch die Verbindung der Drehachse D und der Verlängerung der Radachse 10 definiert werden. Diese beiden Winkel können trigonometrisch ermittelt werden, sofern der Kurvenradius R des Zugfahrzeugs bestimmt worden ist.

In der in der Fig. 3 gezeigten Ausführungsform, in der der gewünschte Winkel $\gamma$ bei 180° konstant gehalten werden soll, kann nun trigonometrisch der einzustellende Winkel $\delta$ aus dem Winkel $\alpha$, dem gewünschten Winkel $\gamma$, dem Kurvenradius R und den geometrischen Abmessungen BC, CD und DE berechnet werden.

Anschließend kann die Prozessoreinheit 200 ein dem einzustellenden Winkel $\delta$ entsprechendes Signal an die Steuereinheit 30 senden, die ein dem einzustellenden Winkels $\delta$ entsprechendes Stellsignal ermittelt und an die Stelleinheiten 20, 22 sendet. Die Stelleinheiten 20, 22 können daraufhin den Zugholm 6 derart drehen, dass dieser mit der Längsrichtung der Dolly-Achse den einzustellenden Winkel $\delta$ einschließt, und so dass sich der gewünschte Winkel $\gamma$ ergibt. Mit Hilfe des Winkelsensors 208, der den aktuellen Winkel $\delta$ (= Ist-Winkel) misst, kann die Steuereinheit 30 die Stelleinheiten 20, 22 so ansteuern und regeln, dass der einzustellende Winkel $\delta$ (= Soll-Winkel) dem aktuellen Winkel $\delta$ (= Ist-Winkel) entspricht.

Bei Verwendung der Winkelgeschwindigkeit und Bahngeschwindigkeit der Dolly-Achse 2 ist es weiterhin möglich, den aktuellen Kurvenradius r der Dolly-Achse 2 zu berechnen. Die Prozessoreinheit 200 kann dadurch weiterhin die Winkel $\gamma$ und $\delta$ in Abhängigkeit eines Verhältnisses zwischen dem Kurvenradius R des Zugfahrzeugs 102 und des Kurvenradius r der Dolly-Achse bestimmen.

In der Fig. 4 ist beispielhaft ein Ablaufdiagram eines erfindungsgemäßen Verfahrens zur Steuerung der erfindungsgemäßen Dolly-Achse 2 dargestellt.

In einem ersten Schritt wird zunächst die aktuelle Winkelgeschwindigkeit $\omega$ (Schritt 302) des Zugfahrzeugsund die aktuelle Bahngeschwindigkeit v (Schritt 304) der Dolly-Achse 2 ermittelt. Aus diesen beiden Parametern kann die Prozessoreinheit 200 den Kurvenradius R (Schritt 306) des Zugfahrzeugs berechnen.

Der Ankuppel-Soll-Winkel $\gamma$ ist als fester Wert vorgegeben, beispielsweise 180° (wie in der Fig. 3 gezeigt).

EP 2 634 018 B1

Die Prozessoreinheit kann daraufhin aus dem Ankuppel-Soll-Winkel $\gamma$ und beispielsweise aus den geometrischen Abmessungen des Zuggespanns 100 den einzustellenden Zugholm-Soll-Winkel $\delta$ bestimmen (Schritt 310), der von den Stelleinheiten 20, 22 eingestellt werden soll.

Ein dem Zugholm-Soll-Winkel $\gamma$ entsprechendes Signal wird von der Prozessoreinheit 200 an die Steuereinheit 30 gesendet, die aus diesem Signal das Stellsignal für die Stelleinheiten 20, 22 bestimmt (Schritt 312).

Das Stellsignal wird daraufhin den Stelleinheiten 20, 22 bereitgestellt, damit sich diese translatorisch um einen Betrag, der dem Stellsignal entspricht, bewegen können, damit sich der einzustellende Zugholm-Soll-Winkel $\delta$ einstellt (Schritt 314).

In dem in den Fig. 1 bis 4 gezeigten Ausführungsbeispielen weist die Dolly-Achse 2 einen drehbaren Zugholm 6 und starre Radachsen 10 auf. Anzumerken ist, dass in einem weiteren Ausführungsbeispiel eine Dolly-Achse eine kinematisch umgekehrte Ausgestaltung aufweisen kann. Diese Dolly-Achse weist einen starr an einem Rahmen befestigten Zugholm und mindestens einen lenkbaren, an dem Rahmen angeordneten Radsatz auf. Eine einstellbare Stelleinheit kann in dieser Ausführungsform dazu ausgebildet sein, den lenkbaren Radsatz derart zu steuern, dass sich ein vorbestimmter, gewünschter Winkel zwischen der Längsrichtung des Zugfahrzeugs und des Zugholms einstellt.

In solch einer Ausführungsform kann die einstellbare Stelleinheit den Winkel zwischen Zugholm und Zugfahrzeuglängsrichtung über eine direkte Steuerung eines Winkels zwischen Rad und Längsrichtung der Dolly-Achse steuern.

Beispielsweise entspricht der in der Ausführungsform mit drehbaren Zugholm und nicht lenkbaren Rädern gewünschte Winkel zwischen Zugholm und Dolly-Achsen-Längsrichtung dem gewünschten Winkel zwischen lenkbarem Rad und Dolly-Achsen-Längsrichtung in der Ausführungsform mit starrem Zugholm und lenkbaren Rädern, wenn der Drehpunkt des Zugholms und der Mittelpunkt der Radachse der Dolly-Achse zusammenfallen.

**Patentansprüche**

1. Dolly-Achse (2) mit:

   - einem Rahmen (4), der eine Längsrichtung (LA) der Dolly-Achse (2) festlegt; und
   - einer am Rahmen (4) angeordneten Sattelkupplungsplatte (8) **gekennzeichnet durch**
   - mindestens einen starr am Rahmen (4) angeordneten Radsatz (12);
   - einen gegenüber dem Rahmen (4) drehbar befestigten Zugholm (6); und
   - mindestens eine einstellbare Stelleinheit (20), die dazu ausgebildet ist, einen vorbestimmten Winkel ($\delta$) zwischen dem Zugholm (6) und der Längsrichtung (LA) der Dolly-Achse (2) einzustellen.

2. Dolly-Achse (20) nach Anspruch 1, ferner mit einer Steuereinheit (30), die dazu ausgebildet ist, die einstellbare Stelleinheit (20) derart zu steuern, dass der Zugholm (6) den vorbestimmten Winkel ($\delta$) zwischen dem Zugholm (6) und der Längsrichtung (LA) der Dolly-Achse (2) einnimmt.

3. Dolly-Achse (2) nach einem der vorhergehenden Ansprüche, ferner mit einer Prozessoreinheit (200), die dazu ausgebildet ist, der Steuereinheit (30) ein dem vorbestimmten Winkel ($\delta$) entsprechendes Signal bereitzustellen, wobei die Steuereinheit (30) dazu ausgebildet ist, das dem vorbestimmten Winkel ($\delta$) entsprechende Signal in ein Stellsignal für die einstellbare Stelleinheit (20) umzuwandeln.

4. Dolly-Achse (2) nach Anspruch 3, bei der die Dolly-Achse (2) dazu ausgebildet ist, mit einem Zugfahrzeug (102), das eine Längsrichtung (ZA) festlegt, drehbar verbunden zu werden und wobei die Steuereinheit (30) weiterhin dazu ausgebildet ist, über das Steuern des einzustellenden Winkels ($\delta$) zwischen dem Zugholm (6) und der Längsrichtung (LA) der Dolly-Achse (2) einen Sollwinkel ($\gamma$) zwischen dem Zugholm (6) der Dolly-Achse (2) und der Längsrichtung (ZA) des Zugfahrzeugs (102) einzustellen.

5. Dolly-Achse (2) nach Anspruch 4, wobei der Sollwinkel ($\gamma$) zwischen dem Zugholm (6) der Dolly-Achse (2) und der Längsrichtung (ZA) des Zugfahrzeugs (102) während einer Vorwärtsfahrt konstant ist, z. B. 180° beträgt, oder in Abhängigkeit des aktuellen Kurvenradius (R) des Zugfahrzeugs (102) variiert.

6. Dolly-Achse (2) nach einem der vorhergehenden Ansprüche, ferner mit einem mit dem Zugholm (6) verbundenen Drehteil (14), das um eine Drehachse (7) drehbar und dazu ausgebildet ist, durch die einstellbare Stelleinheit (20) gedreht zu werden.

7. Dolly-Achse (2) nach Anspruch 6, wobei die Dolly-Achse (2) zwei einstellbare Stelleinheiten (20, 22) aufweist und eine einstellbare Stelleinheit (20) an einem ersten äußeren Ende (16) des Drehteils (14) befestigt ist und die andere Stelleinheit (18) an einem dem ersten äußeren Ende (16) gegenüberliegenden zweiten äußeren Ende (16) des Drehteils (14) befestigt ist.

8. Zuggespann (100) mit:

- einem Zugfahrzeug (102); und
- einer Dolly-Achse (2) nach einem der vorherigen Ansprüche, die mit dem Zugfahrzeug (2) über eine Zugmaulkupplung (120) drehbar verbunden ist.

9. Zuggespann (100) nach Anspruch 8, ferner mit einem Drehratensensor (202), der dazu ausgebildet, die aktuelle Winkelgeschwindigkeit ($\omega$) des Zugfahrzeugs (102) zu ermitteln und einem elektronischen Bremssystem (50), das dazu ausgebildet ist, die aktuelle Bahngeschwindigkeit der Dolly-Achse (2) bereitzustellen.

10. Zuggespann (100) nach Anspruch 9, wobei die Prozessoreinheit (200) ferner dazu ausgebildet ist:

- aus der aktuellen Winkelgeschwindigkeit ($\omega$) und der aktuellen Bahngeschwindigkeit (v) des Zugfahrzeugs (102) einen aktuellen Kurvenradius (R) des Zugfahrzeugs (102) zu ermitteln;
- aus dem aktuellen Kurvenradius (R) des Zugfahrzeugs den gewünschten Winkel ($\gamma$) zwischen der Längsachse (ZA) des Zugfahrzeugs (102) und des Zugholms (6) zu ermitteln; und
- aus dem gewünschten Winkel ($\gamma$) zwischen der Längsachse (ZA) des Zugfahrzeugs (102) und des Zugholms (6) den einzustellenden Winkel ($\delta$) zwischen dem Zugholm (6) und der Längsachse (LA) der Dolly-Achse (2) zu ermitteln.

11. Verfahren zur Steuerung einer Dolly-Achse (2), die einen Rahmen (4), der eine Längsrichtung (LA) der Dolly-Achse (2) festlegt, einen am Rahmen (4) drehbar befestigten Zugholm (6) und mindestens einen nicht lenkbaren Radsatz (10) aufweist, wobei die Dolly-Achse (2) dazu ausgebildet ist, mit einem Zugfahrzeug (102), das eine Längsachse (ZA) aufweist, drehbar verbunden zu werden, mit:

- Bestimmen eines einzustellenden Winkels ($\delta$) zwischen der Längsrichtung (LA) der Dolly-Achse (2) und des Zugholms (6);
- Einstellen des zuvor bestimmten Winkels ($\delta$) zwischen der Längsrichtung (LA) der Dolly-Achse (2) und des Zugholms (6).

12. Verfahren nach Anspruch 11, wobei zur Bestimmung des einzustellenden Winkels ($\delta$) zwischen der Längsrichtung (LA) der Dolly-Achse (2) und des Zugholms (6) ein vorbestimmter Winkel ($\gamma$) zwischen dem Zugholm (6) und der Längsachse (ZA) des Zugfahrzeugs (102) verwendet wird.

13. Verfahren nach Anspruch 12, bei dem der vorbestimmte Winkel ($\gamma$) zwischen dem Zugholm (6) und der Längsachse (ZA) des Zugfahrzeugs (102) in Abhängigkeit von dem aktuellen Kurvenradius (R) des Zugfahrzeugs (102) ermittelt wird, wobei der aktuelle Kurvenradius (R) vorzugsweise anhand der aktuellen Winkelgeschwindigkeit ($\omega$) und der aktuellen Bahngeschwindigkeit (v) des Zugfahrzeugs (102) bestimmt wird.

14. Verfahren nach einem der Ansprüche 12 oder 13, ferner mit:

- Bestimmen eines dem einzustellenden Winkel ($\delta$) entsprechenden Stellsignals für die mindestens eine einstellbare Stelleinheit (20), die dazu ausgebildet ist, den Zugholm (6) zu drehen; und
- Verstellen der einstellbaren Stelleinheit (20) entsprechend dem Stellsignal, so dass sich der einzustellende Winkel ($\delta$) zwischen der Längsrichtung (LA) der Dolly-Achse (2) und dem Zugholm (6) einstellt.

15. Verfahren nach einem der Ansprüche 12 bis 14, wobei durch Ändern des einzustellenden Winkels ($\delta$) zwischen der Längsrichtung (LA) der Dolly-Achse (2) und dem Zugholm (6) der Istwinkel ($\gamma$) zwischen dem Zugholm (6) und der Längsachse (ZA) des Zugfahrzeugs (102) während des Fahrbetriebs innerhalb eines vorbestimmten Winkelbereichs gehalten wird, z. B. zwischen 175° und 185° oder ca. 180°.

**Claims**

1. A dolly axle (2) comprising:

- a frame (4) defining a longitudinal direction (LA) of the dolly axle (2); and
- a fifth-wheel coupling plate (8) arranged on the frame (4), **characterized by**
- at least one wheel set (12) rigidly arranged on the frame (4);
- a traction bar (6) rotatably attached to the frame (4); and
- at least one adjustable actuating unit (20) configured to set a predetermined angle ($\delta$) between the traction bar (6) and the longitudinal direction (LA) of the dolly axle (2).

2. The dolly axle (20) according to claim 1, further comprising a control unit (30) configured to control the adjustable actuating unit (20), such that the traction bar (6) takes up the predetermined angle ($\delta$) between the traction bar (6) and the longitudinal direction (LA) of the dolly axle (2).

3. The dolly axle (2) according to one of the preceding claims, further comprising a processor unit (200) configured to provide a signal to the control unit (30) that corresponds to the predetermined angle ($\delta$), wherein the control unit (30) is configured to convert the signal corresponding to the predetermined angle ($\delta$) into an actuation signal for the adjustable actuating unit (20).

4. The dolly axle (2) according to claim 3, wherein the dolly axle (2) is configured to be rotatably connected to a traction vehicle (102) defining a longitudinal direction (ZA), and wherein the control unit (30) is further configured to set a setpoint angle ($\gamma$) between the traction bar (6) of the dolly axle (2) and the longitudinal direction (ZA) of the traction vehicle (102) by controlling the angle ($\delta$) to be set between the traction bar (6) and the longitudinal direction (LA) of the dolly axle (2).

5. The dolly axle (2) according to claim 4, wherein the setpoint angle ($\gamma$) between the traction bar (6) of the dolly axle (2) and the longitudinal direction (ZA) of the traction vehicle (102) is constant during forward travel, for example 180°, or varies as a function of the current bend radius (R) of the traction vehicle (102).

6. The dolly axle (2) according to one of the preceding claims, further comprising a rotational member (14) connected to the traction bar (6) and rotatable about a rotational axis (7) and being configured to be rotated by means of the adjustable actuating unit (20).

7. The dolly axle (2) according to claim 6, wherein the dolly axle (2) includes two adjustable actuating units (20, 22), one adjustable actuating unit (20) attached to a first outer end (16) of the rotational part (14), and the other actuating unit (18) attached to a second outer end (16) of the rotational part (14) opposite to the first outer end (16).

8. A tractor-trailer combination (100) comprising:

   - a traction vehicle (102); and
   - a dolly axle (2) according to one of the preceding claims, which is rotatably connected to the traction vehicle (102) via a drawbar jaw coupling (120).

9. The tractor-trailer combination (100) according to claim 8, further comprising a rotational rate sensor (202) configured to determine the current angular speed ($\omega$) of the traction vehicle (102), and an electronic brake system (50) configured to provide the current effective velocity of the dolly axle (2).

10. The tractor-trailer combination (100) according to claim 9, wherein the processor unit (200) is further configured to:

    - determine a current bend radius (R) of the traction vehicle (102) based on the current angular speed ($\omega$) and the current effective velocity (v) of the traction vehicle (102);
    - determine the desired angle ($\gamma$) between the longitudinal axis (ZA) of the traction vehicle (102) and the traction bar (6) based on the current bend radius (R) of the traction vehicle; and
    - determine the angle ($\delta$) to be set between the traction bar (6) and the longitudinal axis (LA) of the dolly axle (2) based on the desired angle ($\gamma$) between the longitudinal axis (ZA) of the traction vehicle (102) and the traction bar (6).

11. A method for controlling a dolly axle (2) including a frame (4) defining a longitudinal direction (LA) of the dolly axle (2), a traction bar (6) rotatably attached to the frame (4), and at least one non-steerable wheel set (10), wherein the dolly axle (2) is configured to be rotatably connected to a traction vehicle (102) having a longitudinal axis (ZA), comprising:

- determining an angle ($\delta$) to be set between the longitudinal direction (LA) of the dolly axle (2) and the traction bar (6);
- setting the previously determined angle ($\delta$) between the longitudinal direction (LA) of the dolly axle (2) and the traction bar (6).

12. The method according to claim 11, wherein a predetermined angle ($\gamma$) between the traction bar (6) and the longitudinal axis (ZA) of the traction vehicle (102) is used to determine the angle ($\delta$) to be set between the longitudinal direction (LA) of the dolly axle (2) and the traction bar (6).

13. The method according to claim 12, wherein the predetermined angle ($\gamma$) between the traction bar (6) and the longitudinal axis (ZA) of the traction vehicle (102) is determined as a function of the current bend radius (R) of the traction vehicle (102), wherein the current bend radius (R) is preferably determined on the basis of the current angular speed ($\omega$) and the current effective velocity (v) of the traction vehicle (102).

14. The method according to one of claims 12 and 13, further comprising:

- determining an actuation signal corresponding to the angle ($\delta$) to be set for the at least one adjustable actuating unit (20) configured to rotate the traction bar (6); and
- adjusting the adjustable actuating unit (20) in accordance with the actuation signal with the result that the angle ($\delta$) to be set is set between the longitudinal direction (LA) of the dolly axle (2) and the traction bar (6).

15. The method according to one of claims 12 to 14, wherein by changing the angle ($\delta$) to be set between the longitudinal direction (LA) of the dolly axle (2) and the traction bar (6) the actual angle ($\gamma$) between the traction bar (6) and the longitudinal axis (ZA) of the traction vehicle (102) during the driving mode is kept within an predetermined angular range, for example between 175° and 185° or approximately 180°.

**Revendications**

1. Axe de dolly (2) comprenant :

- un cadre (4) qui définit une direction longitudinale (LA) de l'axe de dolly (2) ; et
- une plaque de sellette d'attelage (8) disposée sur le cadre (4),
**caractérisé par**
- au moins un jeu de roues (12) disposé de manière rigide sur le cadre (4) ;
- une barre de traction (6) fixée à rotation par rapport au cadre (4) ; et
- au moins une unité de réglage (20) ajustable qui est conçue pour ajuster un angle prédéterminé ($\delta$) entre la barre de traction (6) et la direction longitudinale (LA) de l'axe de dolly (2).

2. Axe de dolly (20) selon la revendication 1, comprenant en outre une unité de commande (30) qui est conçue pour commander l'unité de réglage (20) ajustable de telle manière que la barre de traction prenne l'angle prédéterminé ($\delta$) entre la barre de traction (6) et la direction longitudinale (LA) de l'axe de dolly (2).

3. Axe de dolly (2) selon l'une des revendications précédentes, comprenant en outre une unité de processeur (200) qui est conçue pour fournir à l'unité de commande (30) un signal correspondant à l'angle prédéterminé ($\delta$), l'unité de commande (30) étant conçue pour convertir le signal correspondant à l'angle prédéterminé ($\delta$) en un signal de réglage pour l'unité de réglable (20) ajustable.

4. Axe de dolly (2) selon la revendication 3, l'axe de dolly (2) étant conçu pour être relié à rotation à un véhicule tracteur (102) qui définit une direction longitudinale (ZA) et l'unité de commande (30) étant en outre conçue pour ajuster un angle de consigne ($\gamma$) entre la barre de traction (6) de l'axe de Dolly (2) et la direction longitudinale (ZA) du véhicule tracteur (102) par l'intermédiaire de la commande de l'angle ($\delta$) à ajuster entre la barre de traction (6) et la direction longitudinale (LA) de l'axe de dolly (2).

5. Axe de dolly (2) selon la revendication 4, dans lequel l'angle de consigne ($\gamma$) entre la barre de traction (6) de l'axe de dolly (2) et la direction longitudinale (ZA) du véhicule tracteur (102) est constant pendant une marche avant, est par exemple de 180°, ou varie en fonction du rayon de courbe effectif (R) du véhicule tracteur (102).

**6.** Axe de dolly (2) selon l'une des revendications précédentes, comprenant en outre une partie tournante (14) qui est reliée à la barre de traction (6), qui peut tourner autour d'un axe de rotation (7) et qui est conçue pour être amenée à tourner par l'unité de réglage (20) ajustable.

**7.** Axe de dolly (2) selon la revendication 6, l'axe de dolly (2) présentant deux unités de réglage (20, 22) ajustables et une unité de réglage (20) ajustable est fixée à une première extrémité extérieure (16) de la partie tournante (14) et l'autre unité de réglage (18) est fixée à une deuxième extrémité extérieure (16) opposée à la première extrémité extérieure (16) de la partie tournante (14).

**8.** Attelage de traction (100) comprenant :

- un véhicule tracteur (102) ; et
- un axe de dolly (2) selon l'une quelconque des revendications précédentes, qui est relié à rotation au véhicule tracteur (2) par l'intermédiaire d'un attelage à chape de traction (120).

**9.** Attelage de traction (100) selon la revendication 8, comprenant en outre un capteur de taux de rotation (202) qui est conçu pour déterminer la vitesse angulaire effective ($\omega$) du véhicule tracteur (102) et un système de freinage (50) électronique qui est conçu pour fournir la vitesse d'avance tangentielle effective de l'axe de dolly (2).

**10.** Attelage de traction (100) selon la revendication 9, dans lequel l'unité de processeur (200) est en outre conçue pour :

- déterminer un rayon de courbe (R) effectif du véhicule tracteur (102) à partir de la vitesse angulaire effective ($\omega$) et de la vitesse d'avance tangentielle effective (v) du véhicule tracteur (102) ;
- déterminer l'angle ($\gamma$) souhaité entre l'axe longitudinal (ZA) du véhicule tracteur (102) et la barre de traction (6) à partir du rayon de courbe effectif (R) du véhicule tracteur ;
- déterminer l'angle ($\delta$) à ajuster entre la barre de traction (6) et l'axe longitudinal (LA) de l'axe de dolly (2) à partir de l'angle ($\gamma$) souhaité entre l'axe longitudinal (ZA) du véhicule tracteur (102) et la barre de traction (6).

**11.** Procédé de commande d'un axe de dolly (2) qui présente un cadre (4) qui définit une direction longitudinale (LA) de l'axe de dolly (2), une barre de traction (6) fixée à rotation sur le cadre (4) et au moins un jeu de roues (10) non orientables, l'axe de dolly (2) étant conçu pour être relié à rotation à un véhicule tracteur (102) qui présente un axe longitudinal (ZA), comprenant :

- la détermination d'un angle ($\delta$) à ajuster entre la direction longitudinale (LA) de l'axe de dolly (2) et la barre de traction (6) ;
- l'ajustement de l'angle ($\delta$) déterminé précédemment entre la direction longitudinale (LA) de l'axe de dolly (2) et la barre de traction (6).

**12.** Procédé selon la revendication 11, dans lequel un angle prédéterminé ($\gamma$) entre la barre de traction (6) et l'axe longitudinal (ZA) du véhicule tracteur (102) est utilisé pour déterminer l'angle ($\delta$) à ajuster entre la direction longitudinale (LA) de l'axe de dolly (2) et la barre de traction (6).

**13.** Procédé selon la revendication 12, dans lequel l'angle prédéterminé ($\gamma$) entre la barre de traction (6) et l'axe longitudinal (ZA) du véhicule tracteur (102) est calculé en fonction du rayon de courbe effectif (R) du véhicule tracteur (102), le rayon de courbe effectif (R) étant déterminé de préférence sur la base de la vitesse angulaire effective ($\omega$) et de la vitesse tangentielle effective (v) du véhicule tracteur (102).

**14.** Procédé selon la revendication 12 ou 13, comprenant en outre :

- la détermination d'un signal de réglage correspondant à l'angle ($\delta$) à ajuster pour la au moins une unité de réglage (20) ajustable qui est conçue pour tourner la barre de traction (6) ; et
- le réglage de l'unité de réglage (20) ajustable conformément au signal de réglage de sorte qu'un angle ($\delta$) à ajuster entre la direction longitudinale (LA) de l'axe de dolly (2) et la barre de traction (6) s'ajuste.

**15.** Procédé selon l'une des revendications 12 à 14, dans lequel par modification de l'angle ($\delta$) à ajuster entre la direction longitudinale (LA) de l'axe de dolly (2) et la barre de traction (6), l'angle effectif ($\gamma$) entre la barre de traction (6) et l'axe longitudinal (ZA) du véhicule tracteur (102) est maintenu dans une plage angulaire prédéterminée, par exemple entre 175° et 185° ou environ 180°, pendant la conduite.

FIG 1

FIG 2

EP 2 634 018 B1

FIG 3

## FIG 4

302 — | Messen<br>von ω |

| Messen<br>von ν | — 304

| Bestimmen<br>von R | — 306

| Bestimmen<br>von δ | — 310

| Ermitteln<br>des Stellsignals | — 312

| Verstellen<br>der Stelleinheit | — 314

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20305794 U1
- DE 102006044202 A1
- DE 102006044203 A1
- DE 202006015113 U1
- DE 202007018853 U1
- DE 102006044204 A1
- DE 102007018445 A1
- EP 2181915 A1
- DE 102008063660 A1
- DE 19942034 A1
- EP 2145813 A1
- EP 1897790 A1